# EUROPÄISCHE PATENTSCHRIFT

(11) **EP 0 978 425 B1**
(45) Veröffentlichungstag und Bekanntmachung des Hinweises auf die Patenterteilung: **10.11.2004**
(21) Anmeldenummer: 99112706.9
(22) Anmeldetag: 30.06.1999
(51) Int. Cl.: B60R 21/32

(54) **Verfahren und Vorrichtung zur Auslösung von mindestens einem Airbag mittels drucksensitiver Sensoren**
Method and apparatus for the deployment of at least one airbag using pressure sensitive sensors
Méthode et appareil pour le déploiement d' au moins un airbag au moyen de capteurs sensibles à une pression excercée

(30) Priorität: 06.08.1998 DE 19835561
(43) Veröffentlichungstag der Anmeldung: 09.02.2000
(73) Patentinhaber: Volkswagen Aktiengesellschaft, 38436 Wolfsburg (DE)
(72) Erfinder: Zander, André, 38820 Halberstadt (DE); Bergmann, Stephan, 13187 Berlin (DE)

(56) Entgegenhaltungen:
- EP-A- 0 518 381
- EP-A- 0 775 613
- WO-A-99/19175
- DE-A- 4 137 976
- DE-A- 4 237 494
- DE-A- 19 703 173
- US-A- 5 748 075

## Beschreibung

Die Erfindung betrifft ein Verfahren und eine Vorrichtung zur Auslösesteuerung mindestens eines Airbags in einem Kraftfahrzeug.

Eine solche Vorrichtung ist beispielsweise aus der DE 42 37 404 bekannt, bei der die Verformung einer Verstrebung (Deformationsträger) bzw. einer vormontierten Platte mit einem dynamischen Dehnungssensor gemessen, der Verformungsgrad und die Verformungsgeschwindigkeit mit einer Elektronik bewertet und der Airbag gezündet wird, falls aufgrund der Bewertung auf eine Kollision erkannt wurde. Dabei wird der Umstand ausgenützt, daß die Türen der neuen Autogeneration serienmäßig mit Versteifungen bzw. Verstrebungen zur Erhöhung der Sicherheit bei einer Seitenkollision ausgerüstet sein werden. Falls dies nicht der Fall ist, kann das Verfahren auch mit einer im Seitenbereich insbesondere in der Tür montierten Platte vorgenommen werden. Die Versteifung bzw. Verstrebung bzw. Platte wird deshalb vorteilhaft verwendet, weil hier bei geringfügigen Kollisionen, die nur zu einer Blechdelle führen würden, keine Verformung stattfindet. Diese Verstrebung oder Platte gerät auch nicht bei heftigem Schließen der Tür in mechanische Schwingungen und eignet sich daher in besonderer Weise zur Durchführung des Verfahrens unter Einsatz eines dynamischen Dehnungssensors inklusive Elektronik, die bevorzugt unmittelbar auf dieser Versteifung befestigt werden.

Dabei mißt der Dehnungssensor die Verformung der Verstrebung und gibt diese Informationen an eine Auswerte- und Zündelektronik weiter. Diese bewertet den Verformungsgrad und die Verformungsgeschwindigkeit und zündet im Fall einer erkannten Kollision den Airbag. Da die Reaktionszeit des Dehnungssensors auf mechanische Beanspruchung, hier insbesondere auf Biegung vorteilhaft im Mikrosekundenbereich liegt, kann in günstiger Weise eine rechtzeitige Auslösung des Airbags gewährleistet werden.

Gemäß einer bevorzugten Ausgestaltung des Verfahrens und der Vorrichtung wird die Verformung mit einem folienartigen, nach dem piezoelektrischen Prinzip arbeitenden Sensor gemessen. Der Sensor besteht bevorzugt aus einer etwa 0,5 mm dicken flexiblen Folie, die in Vorzugsrichtung angelegte mechanische Beanspruchung (Dehnung/Stauchung) in elektrische Ladung wandelt, die von der Elektronik verarbeitet werden kann.

Nachteilig an der bekannten Vorrichtung ist, daß diese das Unfallgeschehen binarisiert, d. h. der Airbag wird ausgelöst oder nicht. Dadurch treten die gleichen Probleme auf, wie bei bekannten Fahrer- und Beifahrerairbags, nämlich eine Verletzungsgefahr des Insassen aufgrund des schematisch ausgelösten Airbags.

Zur Erhöhung der Sicherheit der Fahrzeuginsassen ist femer aus der EP-A- 0 775 613 ein System zur Auslösesteuerung eines Airbags bekannt, das mehrere deformationssensitive Sensoren aufweist, die beispielsweise an Trägerelementen im seitlichen Bereich eines Kraftfahrzeugs angebracht und mit einer Steuerung gekoppelt sind. Überschreitet der Gradient des Ausgangssignals des Sensors einen vorgegebenen Schwellwert, so wird das Vorliegen einer Kollision erkannt und der Airbag ausgelöst. Zusätzlich kann die Unfallschwere aus der Amplitude des Ausgangssignals des Sensors ermittelt werden, sodass der Airbag abgestimmt auf die so ermittelten Unfallschwere ausgelöst werden kann.

Im wesentlichen offenbart das Dokument EP-A-0 775 613 eine Vorrichtung zur Auslösesteuerung eines Airbags mit mehreren drucksensitiven Sensoren, bei welcher
a) zunächst das Vorliegen einer Kollision des Kraftfahrzeugs erkannt wird, wenn ein Gradient des Ausgangssignals der Sensoren einen vorgegebenen Schwellwert übersteigt;
b) bei einer erkannten Kollision dann eine Amplitude eines jeden Sensors ermittelt wird;
c) dann für jeden Sensor eine lokale Unfallschwere aus der Amplitude ermittelt wird; und
e) schließlich der Airbag an die ermittelte Unfallschwere angepasst angesteuert wird.

Ferner offenbart die EP-A-0 518 381 ein System zur Auslösesteuerung eines Airbags mit mehreren drucksensitiven Sensoren, die zum Beispiel an einer seitlichen Verstrebung eines Kraftfahrzeuges angebracht sind. Bei Erkennen einer Kollision des Kraftfahrzeugs aufgrund eines Ansprechens eines oder mehrerer Sensoren wird der Airbag ausgelöst. Aus der zeitlichen Koinzidenz und/oder der Anzahl der Ausgangssignale der mehreren Sensoren kann auf das Kollisionsobjekt bzw. die Art der Kollision geschlossen werden. Der Airbag wird nur dann ausgelöst, falls es die so bestimmte Art der Kollision erfordert.

Der Vollständigkeit halber wird auch auf die DE-A-41 37 976 verwiesen, in der ein spezieller drucksensitiver Sensor in Form einer Folienanordnung offenbart ist, dessen elektrischer Widerstand je nach Druckbelastung veränderbar ist, und der auch in der vorliegenden Erfindung eingesetzt werden kann.

Ausgehend von dem genannten Stand der Technik liegt der vorliegenden Erfindung das technische Problem zugrunde, ein Verfahren und eine Vorrichtung zur Auslösesteuerung mindestens eines Airbags zu schaffen, bei denen die Verletzungsgefahr für die Fahrzeuginsassen bei der Auslösung des Seitenairbags weiter reduziert wird.

Die Lösung des technischen Problems ergibt sich durch die Merkmale des Patentanspruchs 1 bzw. 2. Weitere vorteilhafte Ausgestaltungen der Erfindung ergeben sich aus den Unteransprüchen.

Durch die Anordnung einer Vielzahl von drucksensitiven Sensoren, die insbesondere in und/oder an Deformationselementen und/oder zusätzlichen Trägem entlang eines seitlichen Bereichs und/oder eines Front- und/oder Heckbereichs angeordnet sind und deren jeweilige Amplitude und Gradient ausgewertet werden, ist sowohl eine Unfallschwere als auch eine lokale Verteilung der Kollision ermittelbar, aus der wiederum auf die Art des Kollisionsobjekts geschlossen und der Airbag angepasst an die Unfallschwere und die Art des Kollisionsobjekts ausgelöst werden kann. Aus der lokalen Verteilung kann beispielsweise ein pfahlförmiges Objekt, wie ein Straßenpoller, von einer breiten Barriere, wie einer Mauer, unterschieden werden. Bei gleicher Fahrgeschwindigkeit ist die Intrusion durch den Poller (örtlich sehr begrenzter Pfahl) sehr viel größer, sodass hier bevorzugt der Airbag sehr schnell und hart aufgeblasen wird, wohingegen bei Barrieren ein nicht so hartes Aufblasen vorteilhaft ist, da es zu einer großflächigen Deformation kommt und somit ein polsterhaftes Abfedern des Aufpralls ausreichend ist.

Der Unterschied zwischen dem erfindungsgemäßen System zur Auslösesteuerung mindestens eines Airbags und den oben beschriebenen herkömmlichen Systemen besteht insbesondere darin, dass gemäß der Erfindung zur Ermittlung einer lokalen Unfallschwere nicht nur die Amplitude, sondern auch der Gradient der Ausgangssignale der Sensoren herangezogen wird. Auf der Basis der auf diese spezielle Weise ermittelten lokalen Unfallschwere für jeden Sensor wird dann auf die Art des Kollisionsobjekts geschlossen und der Airbag entsprechend angesteuert. Diese Art der Bestimmung einer lokalen Unfallschwere ist aus keiner der oben genannten Dokumente zum Stand der Technik bekannt.

Die Erfindung wird nachfolgend anhand eines bevorzugten Ausführungsbeispieles näher erläutert. Die Figuren zeigen:
- Fig. 1: eine Seitenansicht eines Kraftfahrzeuges und
- Fig. 2: einen schematischen Signalverlauf eines drucksensitiven Sensors bei einer Kollision.

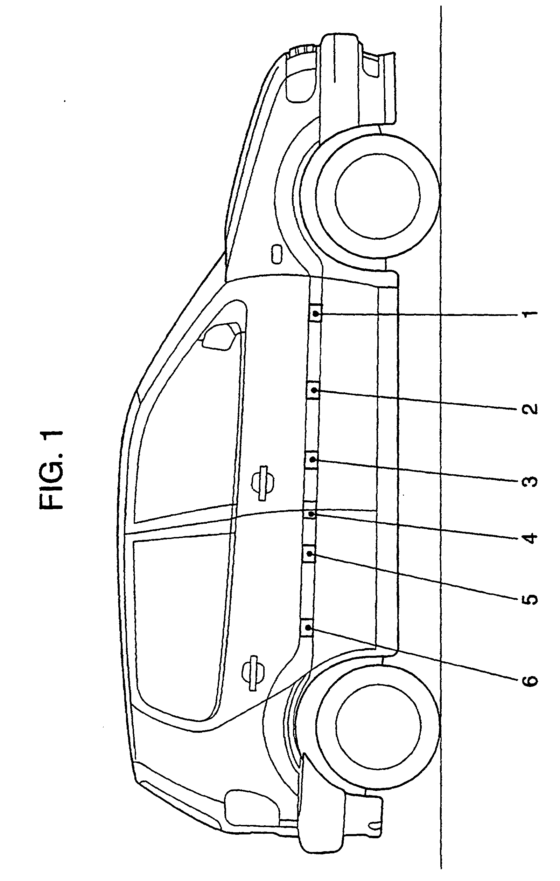

In der Fig. 1 ist ein Kraftfahrzeug dargestellt, entlang dessen Seitenbereiches sechs drucksensitive Sensoren 1 - 6 in und/oder an Deformationselementen angeordnet sind. Die Sensoren 1 - 3 sind dabei in und/oder an den Aufprallträgem der Fahrer- bzw. Beifahrertür angeordnet. Der Sensor 4 ist in und/oder an der B-Säule zwischen Vorder- und Hintertür und die Sensoren 4, 5 wieder in und/oder an den Aufprallträgern der Hintertüren angeordnet. Zusätzlich können noch Sensoren an der A- und C-Säule des Kraftfahrzeuges angeordnet sein. Die Sensoren 1 - 6 sind vorzugsweise als piezoelektische Folien ausgebildet, die jeweils auf eine flexible Leiterplatte aufgebracht sind, auf der beispielsweise eine Auswerteelektronik angeordnet ist. Die Leiterplatte ist mit einem starren Träger, vorzugsweise einer Metallplatte verbunden. Der starre Träger hat dabei einerseits die Funktion die piezoelektrische Folie gegen leichte Drücke abzupuffem und andererseits die mechanischen Kräfte von den Deformationselementen auf die Folie zu übertragen. Darüber hinaus läßt sich in der Fertigung ein derartiger starrer Träger besser handhaben. Der Träger wird dann beispielsweise an dem Deformationselement angeklebt, verschweißt, verschraubt oder in vorgesehene Aussparungen eingerastet. In einer alternativen Ausführungsform kann die Folie auch direkt auf den Träger aufgebracht werden und die Leiterplatte über ein isolierendes Polster sandwichmäßig aufgebracht werden, wobei dann die elektrische Verbindung zwischen den Folien und der Leiterplatte über flexible Leiterbahnen realisiert wird. Die Datenübertragung der Sensorsignale der drucksensitiven Sensoren 1 bis 6 erfolgt zum Airbagsteuergerät vorzugsweise über digitale Datenleitungen. Des weiteren ist denkbar eine erste Auswertung der einzelnen Senorsignale sensorselektiv direkt im Sensor 1 bis 6 durchzuführen und die ausgewerteten Signale dann dem Airbagsteuergerät digital oder analog zuzuleiten.

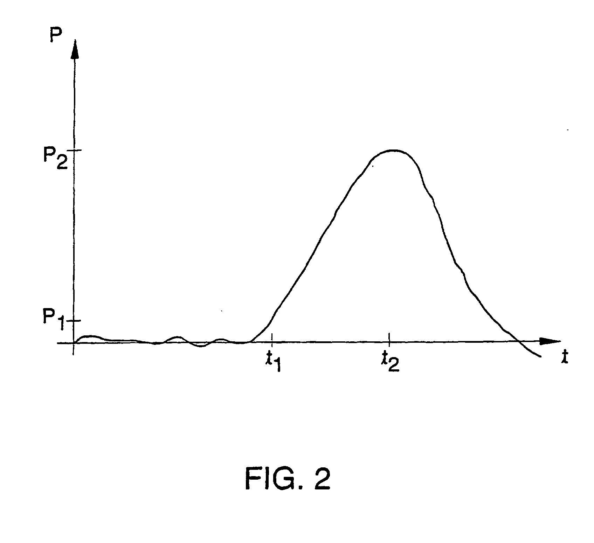

In der Fig. 2 ist ein schematischer Signalverlauf an einem Sensor in Kollisionsfall dargestellt, wobei ein Pegel P über der Zeit t dargestellt ist. Bis zum Zeitpunkt t₁ wird der Signalverlauf nur durch Störgrößen wie beispielsweise Rauschen bestimmt. Um daher die Auswerteelektronik nicht unnötig zu belasten, kann eine Schwelle P₁ festgelegt werden, so daß erst bei Überschreiten der Schwelle P₁ eine Auswertung vorgenommen wird, wobei die Schwelle P₁ größer als der maximale Störpegel gewählt wird. Im Zeitpunkt t₁ der Kollision steigt dann der Pegel P nahezu linear bis zum Erreichen einer Amplitude P₂ an, um anschließend wieder abzufallen. Die wesentlichen Informationen stecken dabei in der Amplitude P₂ und der Steigung zwischen den Pegeln P₁ und P₂. Die Steigung stellt die Deformationsgeschwindigkeit des Deformationselementes dar.

Schleudert nun beispielsweise das Kraftfahrzeug mit der Beifahrertür mittig gegen einen Laternenpfahl, so erfährt der Aufprallträger der Beifahrertür an der Stelle des Sensors 2 die größte Deformation, die sich in einem steilen Anstieg und einer großen Amplitude P₂ niederschlägt. Da die Sensoren 1 und 3 an gleichen Aufprallträgern angeordnet sind, wird sich der Aufprallträger in Abhängigkeit von der Schwere des Aufpralls auch dort verformen, jedoch nicht derart ausgeprägt wie beim Sensor 2. Der an der B-Säule angeordnete Sensor 4 erfaßt hingegen nur einen äußerst geringen oder gar keinen Druck, ebenso wie die Sensoren 5 und 6. Anhand des Verlaufs der Sensorsignale über die Seite des Kraftfahrzeuges kann daher auf eine Kollision mit einem pfahlartigen Objekt geschlossen werden und der Airbag entsprechend optimiert angesteuert werden. Da pfahlartige Objekt starke lokale Intrusionen zur Folge haben, sollte der Seitenairbag schnell und hart aufgeblasen werden. Sind hingegen auch Seitenairbags für die hinteren Sitze vorhanden, so müßten diese entweder gar nicht oder aber langsamer und nicht so hart aufgeblasen werden.

Schleudert das Kraftfahrzeug hingegen mit der Seite gegen eine Mauer, so würden alle Sensoren 1 - 6 nahezu den gleichen Signalverlauf aufweisen. Da bei einer solchen Kollision die lokalen Intrusionen geringer sind, müßten dann beide Airbags nicht so hart aufgeblasen werden, wobei die Geschwindigkeit des Aufblasens von der Aufprallgeschwindigkeit abhängig sein kann.

Nach den gleichen Kriterien kann auch ein seitliches Hineinfahren eines anderen Kraftfahrzeuges beurteilt werden.

Dadurch kann das Verletzungsrisiko bei verschiedenartigen Kollisionen beim Aufblasen des Airbags erheblich verringert werden, da nur wenn es die Kollision wirklich erfordert, der Airbag schnell und hart aufgeblasen wird.

Die Vorrichtung kann selbstverständlich auch mit bekannten Sitzbelegungssensoren gekoppelt werden, die neben der Belegung auch die Art des Insassen erfassen (Babysitz). Des weiteren können auch Vorabinformationen mittels einer Precrash-Sensorik gewonnen werden, um beispielsweise die Reaktionszeiten zu reduzieren.

## Patentansprüche

1. Verfahren zur Auslösesteuerung mindestens eines Airbags mittels mehrerer drucksensitiver Sensoren (1 - 6), die insbesondere in und/oder an Deformationselementen und/oder zusätzlichen Trägem entlang eines seitlichen Bereichs und/oder eines Front- und/oder Heckbereichs eines Kraftfahrzeugs angeordnet sind und deren Signalausgänge mit mindestens einem Airbagsteuergerät verbunden sind, umfassend folgende Verfahrensschritte:
a) Erkennen des Vorliegens einer Kollision des Kraftfahrzeugs, wenn ein Ausgangssignal (P) der Sensoren (1 - 6) einen Schwellwert (P₁) übersteigt;
b) Ermitteln einer Amplitude (P₂) und eines Gradienten eines jeden Sensors (1 - 6) bei erkannter Kollision;
c) Ermitteln einer lokalen Unfallschwere für jeden Sensor (1 - 6) aus den jeweiligen Werten der Amplitude und des Gradienten, die in Verfahrensschritt b) ermittelt wurden;
d) Bestimmen der Art des Kollisionsobjekts aus der Verteilung der in Verfahrensschritt c) ermittelten lokalen Unfallschwere aller Sensoren (1 - 6); und
e) Ansteuem des mindestens einen Airbags mit einer an die ermittelte Unfallschwere und die bestimmte Art des Kollisionsobjekts angepassten Auslösegeschwindigkeit und Airbaghärte.

2. Vorrichtung zur Auslösesteuerung mindestens eines Airbags, umfassend mehrere drucksensitive Sensoren (1 - 6), die insbesondere in und/oder an Deformationselementen und/oder zusätzlichen Trägem entlang eines seitlichen Bereiches und/oder eines Front- und/oder Heckbereichs eines Kraftfahrzeuges angeordnet sind, deren Signalausgänge mit mindestens einem Airbagsteuergerät verbunden sind, wobei das Airbagsteuergerät derart ausgebildet ist, dass
a) das Vorliegen einer Kollision des Kraftfahrzeugs erkennbar ist, wenn ein Ausgangssignal (P) der Sensoren (1 - 6) einen Schwellwert (P₁) übersteigt;
b) bei erkannter Kollision eine Amplitude (P₂) und ein Gradient eines jeden Sensors (1 - 6) ermittelbar sind;
c) für jeden Sensor (1 - 6) eine lokale Unfallschwere aus den jeweiligen ermittelten Werten der Amplitude und des Gradienten emnittelbar ist;
d) die Art des Kollisionsobjekts aus der Verteilung der ermittelten lokalen Unfallschwere aller Sensoren (1 - 6) bestimmbar ist; und
e) der mindestens eine Airbag mit einer an die ermittelte Unfallschwere und die bestimmte Art des Kollisionsobjekts angepassten Auslösegeschwindigkeit und Airbaghärte ansteuerbar ist.

3. Vorrichtung nach Anspruch 2, **dadurch gekennzeichnet, daß** die drucksensitiven Sensoren (1 - 6) in und/oder an den Aufprallträgern der Fahrzeugtüren und/oder des Front- und/oder des Heckbereichs und/oder an den A-, B- und C-Säulen angeordnet sind.

4. Vorrichtung nach Anspruch 2 oder 3, **dadurch gekennzeichnet, daß** die drucksensitiven Sensoren (1 - 6) als piezoelektrische Sensoren, insbesondere als piezoresistive Sensoren oder als Dehnungsmeßstreifen ausgebildet sind.

5. Vorrichtung nach einem der Ansprüche 2 bis 4, **dadurch gekennzeichnet, daß** die Sensoren (1 - 6) als Folien ausgebildet sind.

6. Vorrichtung nach einem der Ansprüche 2 bis 5, **dadurch gekennzeichnet, daß** die Sensoren (1 - 6) auf einer flexiblen Leiterplatte aufgebracht sind, die mit einem starren Träger, insbesondere einer Metallplatte, verbunden ist.

7. Vorrichtung nach Anspruch 6, **dadurch gekennzeichnet, daß** die Metallplatte mit den Deformationselementen verschraubt, verschweißt, verklebt oder verrastet ist.

8. Vorrichtung nach einem der Ansprüche 2 bis 7, **dadurch gekennzeichnet, daß** zur Übertragung von Sensorsignalen der drucksensitiven Sensoren (1 bis 6) zum Airbagsteuergerät digitale Datenleitungen nutzbar sind.

9. Vorrichtung nach einem der Ansprüche 2 bis 7, **dadurch gekennzeichnet, daß** die Sensorsignale der drucksensitiven Sensoren (1 bis 6) sensorselektiv auswertbar und die ausgewerteten Signale dem Airbagsteuergerät analog oder digital zuleitbar sind.

## Claims

1. Method for controlling the triggering of at least one airbag by means of a plurality of pressure-sensitive sensors (1-6) which are arranged, in particular in and/or on deformation elements and/or additional carriers along a lateral region and/or a front and/or rear region of a motor vehicle, and whose signal outputs are connected to at least one airbag controller, comprising the following method steps:
a) The presense of a collision of the motor vehicle is detected if an output signal (P) of the sensors (1-6) exceeds a threshold value (P₁);
b) An amplitude (P₂) and a gradient of each sensor (1-6) is determined when a collision is detected;
c) A local severity of accident is determined for each sensor (1-6) from the respective values of the amplitude and of the gradient which have been determined in method step b);
d) The type of the collision object is determined from the distribution of the local severity of accident of all the sensors (1-6) which is determined in method step c); and
e) The at least one airbag is actuated using a triggering speed and airbag hardness which are adapted to the severity of accident which is determined and to the specific type of collision object.

2. Device for controlling the triggering of at least one airbag, comprising a plurality of pressure-sensitive sensors (1-6) which are arranged, in particular, in and/or on deformation elements and/or additional carriers along a lateral region and/or a front and/or rear region of a motor vehicle and whose signal outputs are connected to at least one airbag controller, the airbag controller being embodied in such a way that
a) the presence of a collision of the motor vehicle can be detected if an output signal (P) of the sensors (1-6) exceeds a threshold value (P₁);
b) when a collision is detected, an amplitude (P₂) and a gradient of each sensor (1-6) can be determined;
c) a local severity of accident can be determined for each sensor (1-6) from the respective values determined for the amplitude and for the gradient;
d) the type of the collision object can be determined from the distribution of the local severity of accident of all the sensors (1-6) which is determined; and
e) the at least one airbag can be actuated using a triggering speed and airbag hardness which are adapted to the severity of accident which is determined and to the specific type of collision object.

3. Device according to Claim 2, **characterized in that** the pressure sensitive sensors (1-6) are arranged in and/or on the impact carriers of the vehicle doors and/or the front region and/or the rear region and/or on the A, B and C pillars.

4. Device according to Claim 2 or 3, **characterized in that** the pressure-sensitive sensors (1-6) are embodied as piezo-electric sensors, in particular as piezo-resistive sensors or as strain gauges.

5. Device according to one of Claims 2 to 4, **characterized in that** the sensors (1-6) are embodied as foils.

6. Device according to one of Claims 2 to 5, **characterized in that** the sensors (1-6) are mounted on a flexible printed circuitboard which is connected to a rigid carrier, in particular a metal plate.

7. Device according to Claim 6, **characterized in that** the metal plate is screwed, welded, bonded or latched to the deformation elements.

8. Device according to one of Claims 2 to 7, **characterized in that** digital data lines can be used to transmit sensor signals of the pressure-sensitive sensors (1 to 6) to the airbag controller.

9. Device according to one of Claims 2 to 7, **characterized in that** the sensor signals of the pressure-sensitive sensors (1 to 6) can be evaluated on a sensor-selective basis, and the evaluated signals can be fed to the airbag controller in analogue or digital form.

## Revendications

1. Procédé pour la commande de déploiement d'au moins un airbag au moyen de plusieurs capteurs sensibles à la pression (1 - 6), qui sont disposés notamment dans et/ou sur des éléments de déformation et/ou des supports supplémentaires le long d'une région latérale et/ou d'une région avant et/ou d'une région arrière d'un véhicule automobile et dont les sorties de signaux sont connectées à au moins un appareil de commande d'airbag, comprenant les étapes de procédé suivantes :
a) reconnaissance de la présence d'une collision du véhicule automobile lorsqu'un signal de sortie (P) des capteurs (1 - 6) dépasse une valeur seuil (P₁) ;
b) détection d'une amplitude (P₂) et d'un gradient de chaque capteur (1 - 6) lorsqu'une collision a été reconnue ;
c) détection d'une sévérité locale de l'accident pour chaque capteur (1 - 6) à partir des valeurs respectives de l'amplitude et du gradient, qui ont été détectées dans l'étape de procédé b) ;
d) détermination du type de l'objet de la collision à partir de la répartition de la sévérité locale de l'accident détectée dans l'étape de procédé c) pour tous les capteurs (1 - 6) ; et
e) commande de l'au moins un airbag avec une vitesse de déploiement et une dureté d'airbag adaptées à la sévérité de l'accident détectée et au type déterminé de l'objet de la collision.

2. Dispositif pour la commande de déploiement d'au moins un airbag comprenant plusieurs capteurs sensibles à la pression (1 - 6), qui sont disposés notamment dans et/ou sur des éléments de déformation et/ou des supports supplémentaires le long d'une région latérale et/ou d'une région avant et/ou d'une région arrière d'un véhicule automobile dont les sorties de signaux sont connectées à au moins un appareil de commande d'airbag, dans lequel l'appareil de commande d'airbag étant réalisé de telle sorte que :
a) la présence d'une collision du véhicule automobile puisse être reconnue lorsqu'un signal de sortie (P) des capteurs (1 - 6) dépasse une valeur seuil (P₁) ;
b) lorsqu'une collision a été reconnue, une amplitude (P₂) et un gradient de chaque capteur (1 - 6) puissent être détectés ;
c) pour chaque capteur (1 - 6), une sévérité locale de l'accident puisse être détectée à partir des valeurs respectives détectées de l'amplitude et du gradient ;
d) le type de l'objet de la collision puisse être déterminé à partir de la répartition de la sévérité locale de l'accident détectée pour tous les capteurs (1 - 6) ; et
e) l'au moins un airbag puisse être commandé avec une vitesse de déploiement et une dureté d'airbag adaptées à la sévérité de l'accident détectée et au type déterminé de l'objet de la collision.

3. Dispositif selon la revendication 2, **caractérisé en ce que** les capteurs sensibles à la pression (1 - 6) sont disposés dans et/ou sur les supports d'impact des portes du véhicule et/ou de la région avant et/ou de la région arrière et/ou sur les colonnes A, B et C.

4. Dispositif selon la revendication 2 ou 3, **caractérisé en ce que** les capteurs sensibles à la pression (1 - 6) sont réalisés sous forme de capteurs piézoélectriques, notamment sous forme de capteurs piézorésistifs ou sous forme de jauges de contrainte.

5. Dispositif selon l'une quelconque des revendications 2 à 4, **caractérisé en ce que** les capteurs (1 - 6) sont réalisés sous forme de feuilles.

6. Dispositif selon l'une quelconque des revendications 2 à 5, **caractérisé en ce que** les capteurs (1 - 6) sont placés sur une plaquette de circuits imprimés flexibles qui est connectée à un support rigide, notamment une plaque métallique.

7. Dispositif selon la revendication 6, **caractérisé en ce que** la plaque métallique est vissée, soudée, collée ou encliquetée avec les éléments de déformation.

8. Dispositif selon l'une quelconque des revendications 2 à 7, **caractérisé en ce que** pour le transfert des signaux des capteurs sensibles à la pression (1 à 6) à l'appareil de commande d'airbag, on peut utiliser des lignes de données numériques.

9. Dispositif selon l'une quelconque des revendications 2 à 7, **caractérisé en ce que** les signaux des capteurs sensibles à la pression (1 à 6) peuvent être analysés de manière sélective pour chaque capteur et les signaux analysés peuvent être acheminés à l'appareil de commande d'airbag de manière analogique ou numérique.
